# EUROPEAN PATENT APPLICATION

(11) **EP 4 447 137 A1**
(43) Date of publication of application: **16.10.2024**
(21) Application number: 22903991.2
(22) Date of filing: 17.11.2022
(51) Int. Cl.: H01M 4/02, H01M 6/02, H01M 10/04, H01M 50/531

(54) **ELECTRODE PLATE, ELECTRODE BODY, AND BATTERY**

(30) Priority: 08.12.2021 JP 2021199162
(71) Applicant: Panasonic Energy Co., Ltd., Osaka 570-8511 (JP)
(72) Inventor: ISHIKAWA Toshiki, Kadoma-shi, Osaka 571-0057 (JP); OOTA Satoshi, Kadoma-shi, Osaka 571-0057 (JP)
(74) Representative: Novagraaf International SA
(86) International application number: PCT/JP2022/042657
(87) International publication number: WO 2023/106060

(57) **Abstract**

The present invention is an electrode plate, an electrode body, and a battery, wherein the quality of the electrode body is stabilized while allowing rapid cause analysis to be carried out when a malfunction occurs. The electrode plate has a strip-like core, a mixture layer formed on both sides of the core, and an exposed section in which the core is exposed, and which is provided so as to be in contact with one short-direction end of the core. The exposed section is provided in mutually opposing positions on both sides of the core and is adjacent to the mixture layer in the short direction and long direction of the core. A lead is connected to the exposed section so as to extend out of one end on either surface of the core. An identification display part by which a manufacturing process history can be identified is formed in the exposed section on either surface of the core.

## Description

### TECHNICAL FIELD

The present disclosure generally relates to an electrode plate, an electrode assembly, and a battery.

### BACKGROUND ART

In recent years, the energy density of a battery has increased more and more, and the reliability of the battery is required to be further improved. However, in a process of manufacturing a battery or after shipment of a battery, if a failure occurs for some reason to cause heat generation in the battery, and most of components of the battery are damaged, it may be difficult to analyze a cause of the failure.

PATENT LITERATURE 1 discloses a technique in which in an electrode assembly, an identification mark is provided on an exposed part in which a core of an electrode plate is exposed and/or a lead connected to the electrode plate. The identification mark is a mark that enables confirmation of manufacturing process history records. If a failure occurs in the battery, most of components of the battery are severely deformed by high heat; however, the core and the lead, which are each formed of a metal material, are hardly deformed. PATENT LITERATURE 1 discloses that at the time of occurrence of a problem in the battery, the manufacturing process history records can easily be confirmed using the identification mark, enabling easy analysis of a cause of the problem.

PATENT LITERATURE 2 discloses a technique in which in an electrode plate, an identification mark is provided on an exposed part and a mixture layer is disposed at a position on an opposite side in a thickness direction of the core from the identification mark. PATENT LITERATURE 2 discloses that the identification mark can be formed with high accuracy.

### CITATION LIST

### PATENT LITERATURE

PATENT LITERATURE 1: Japanese Unexamined Patent Application Publication No. 2006-40875
PATENT LITERATURE 2: International Publication No. WO 2019/193869

### SUMMARY

In the configuration described in PATENT LITERATURE 1, the lead is small in width, and thus, it is difficult to form an identification mark part on the lead. Also, in the configuration described in PATENT LITERATURE 1, an identification mark may fail to be formed with high accuracy because of a decrease in rigidity of a part, on which the identification mark is formed, of the core of each of the positive electrode plate and the negative electrode plate. In the configuration described in PATENT LITERATURE 2, when an identification mark is formed on a core, a mixture layer provided on a surface on an opposite side of the core from the identification mark bulges, and thus, spaces among layers of an electrode assembly in which electrode plates are wound may be non-uniform. The techniques described in PATENT LITERATURES 1 and 2 still leave room for improvement in the above-described points.

It is an advantage of the present disclosure to, in an electrode plate, an electrode assembly, and a battery, enable upon occurrence of a failure, quick analysis of a cause of the failure and stabilize quality of the electrode assembly.

An electrode plate according to the present disclosure is an electrode plate comprising a band-like core, a mixture layer that is formed on each surface of the core, and an exposed part that is provided so as to be in contact with one end in a short direction of the core and in which the core is exposed, wherein the exposed part is provided at a position where both surfaces of the core face each other, and is adjacent to the mixture layer in the short direction and a longitudinal direction of the core, in any one surface of the core, a lead is connected to the exposed part to extend from the one end, and on any one surface of the core, an identification mark part capable of specifying a manufacturing process history records is formed on the exposed part.

An electrode assembly according to the present disclosure is an electrode assembly in which a first electrode plate and a second electrode plate having different polarities from each other are wound with a separator interposed between the first electrode plate and the second electrode plate, wherein the first electrode plate is the above-described electrode plate.

A battery according to the present disclosure comprises the above-described electrode assembly, an electrolyte, and an exterior housing can that houses the electrode assembly and the electrolyte.

According to the electrode plate, the electrode assembly, and the battery according to the present disclosure, the identification mark can be formed with high accuracy regardless of the rigidity of the core of the electrode plate. This makes it possible to easily confirm the identification mark at the time of occurrence of a failure, thereby quickly performing analysis of a cause of the failure on the basis of the identification mark.

### BRIEF DESCRIPTION OF DRAWING

FIG. 1 is a longitudinal sectional view of a cylindrical secondary battery of an example of an embodiment.
FIG. 2 is a perspective view of a wound-type electrode assembly of an example of an embodiment.
FIG. 3 is a diagram illustrating a positive electrode plate of an example of an embodiment, in a developed state.
FIG. 4 is an enlarged view of the periphery of a positive electrode exposed part in the positive electrode plate in FIG. 3.
FIG. 5 is a sectional view taken along line A-A in FIG. 4.

### DESCRIPTION OF EMBODIMENTS

Hereinafter, an embodiment of the present disclosure will be described in detail with reference to the accompanying drawings. In the following description, specific shapes, materials, numeric values, directions, and the like are examples given for facilitating understanding of the present disclosure and, without being limited thereto, can be appropriately changed according to specifications of the electrode plate, the electrode assembly, or the battery. Also, in the following, the term "substantially" is used for meaning including, for example, a case that can be regarded as substantially the same in addition to a case that is completely the same. Furthermore, where a plurality of embodiments and modified examples are included in the following description, it is assumed from the beginning that feature parts of the embodiments and modified examples are appropriately used in combination.

In the following, a cylindrical non-aqueous electrolyte secondary battery in which a wound-type electrode assembly is housed in a cylindrical exterior housing body will be described; however, the battery is not limited to this example. The battery may be another secondary battery or a primary battery, for example. The exterior housing body is not limited to having a cylindrical shape, and may have, for example, a rectangular shape, a coin shape, or another shape, or may be of a pouch type made of a laminate sheet including a metal layer and a resin layer. The electrode plate (first electrode plate) is at least one of a positive electrode and a negative electrode plate.

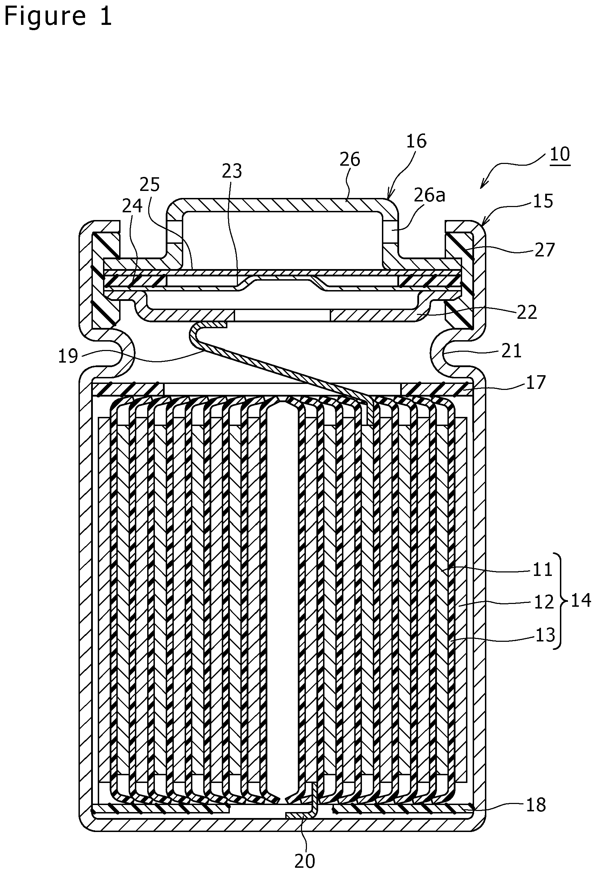

FIG. 1 is an axial sectional view of a cylindrical secondary battery 10 of an example of an embodiment. In the secondary battery 10 illustrated in FIG. 1, an electrode assembly 14 and a non-aqueous electrolyte (not illustrated) are housed in an exterior housing body 15. The electrode assembly 14 has a wound-type structure in which a positive electrode plate 11 and a negative electrode plate 12 are wound with a separator 13 interposed therebetween. For a non-aqueous solvent of the non-aqueous electrolyte (organic solvent), carbonates, lactones, ethers, ketones, esters, and the like may be used, and two or more of these solvents may be mixed to be used. When two or more of the solvents are mixed to be used, a mixed solvent including a cyclic carbonate and a chain carbonate is preferably used. For example, ethylene carbonate (EC), propylene carbonate (PC), butylene carbonate (BC), and the like may be used as the cyclic carbonate, and dimethyl carbonate (DMC), ethyl methyl carbonate (EMC), diethyl carbonate (DEC), and the like may be used as the chain carbonate. For an electrolyte salt in the non-aqueous electrolyte, LiPF₆, LiBF₄, LiCF₃SO₃, and the like, and a mixture thereof may be used. An amount of the electrolyte salt dissolved in the non-aqueous solvent may be, for example, greater than or equal to 0.5 mol/L and less than or equal to 2.0 mol/L. Hereinafter, for convenience of description, a sealing assembly 16 side will be described as "the upper side", and a bottom side of the exterior housing body 15 will be described as "the lower side".

An opening of the exterior housing body 15 is capped with the sealing assembly 16 to seal inside the secondary battery 10. Insulating plates 17 and 18 are provided on the upper and lower sides of the electrode assembly 14, respectively. A positive electrode lead 19 extends upward through a through hole of the insulating plate 17, and is welded with the lower face of a filter 22, which is a bottom plate of the sealing assembly 16. In the secondary battery 10, a cap 26, which is a top plate of the sealing assembly 16 electrically connected to the filter 22, becomes a positive electrode terminal. Meanwhile, a negative electrode lead 20 extends through a through hole of the insulating plate 18 toward the bottom side of the exterior housing body 15, and is welded with a bottom inner face of the exterior housing body 15. In the secondary battery 10, the exterior housing body 15 becomes a negative electrode terminal. Note that when the negative electrode lead 20 is provided on an outer wound end, the negative electrode lead 20 extends through an outer side of the insulating plate 18 toward the bottom side of the exterior housing body 15, and is welded with the bottom inner face of the exterior housing body 15.

The exterior housing body 15 is, for example, a bottomed cylindrical metallic exterior housing can. A gasket 27 is provided between the exterior housing body 15 and the sealing assembly 16 to achieve sealability inside the secondary battery 10. The exterior housing body 15 has a grooved portion 21 formed by, for example, pressing a side wall thereof from the outside to support the sealing assembly 16. The grooved portion 21 is preferably formed circularly along the circumferential direction of the exterior housing body 15, and supports the sealing assembly 16 with an upper face of the grooved portion 21.

The sealing assembly 16 has a stacked structure of a filter 22, a lower vent member 23, an insulating member 24, an upper vent member 25, and a cap 26 in this order from the electrode assembly 14 side. Each member constituting the sealing assembly 16 has, for example, a disk shape or a ring shape, and each member except for the insulating member 24 is electrically connected to each other. The lower vent member 23 and the upper vent member 25 are connected to each other at each of central parts thereof, and the insulating member 24 is interposed between the circumferential portions of the vent members 23 and 25. If the internal pressure of the battery increases with abnormal heat generation, for example, the lower vent member 23 ruptures and the upper vent member 25 expands toward the cap 26 side to be separated from the lower vent member 23, resulting in cutting off an electrical connection between the both members. If the internal pressure further increases, the upper vent member 25 ruptures, and gas is discharged through an opening 26a of the cap 26.

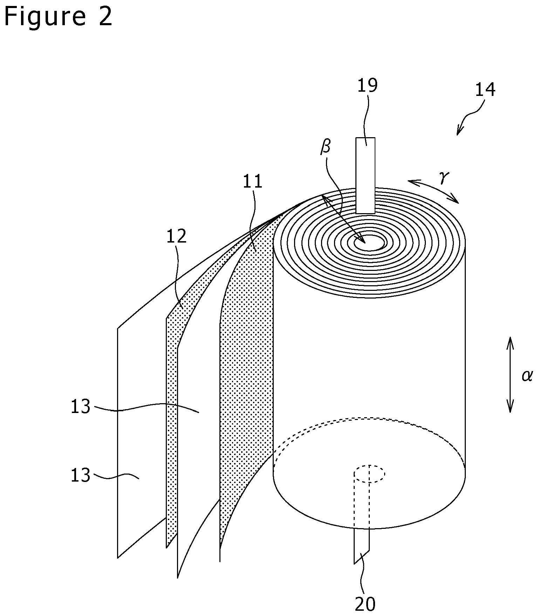

Next, the electrode assembly 14 will be described with reference to FIG. 2. FIG. 2 is a perspective view of the electrode assembly 14. As described above, the electrode assembly 14 has a wound structure in which the positive electrode plate 11 and the negative electrode plate 12 are spirally wound with the separator 13 interposed therebetween. All of the positive electrode plate 11, the negative electrode plate 12, and the separator 13 are formed into a band shaped, and are spirally wound around a winding axis to be alternately stacked in a radial direction β of the electrode assembly 14. In the radial direction β, the winding axial side is referred to as the inner circumferential side, and the opposite side is referred to as the outer circumferential side. In the electrode assembly 14, the longitudinal direction of the positive electrode plate 11 and negative electrode plate 12 corresponds to a winding direction γ, and the short direction of the positive electrode plate 11 and negative electrode plate 12 corresponds to an axial direction α. The positive electrode lead 19 extends, on an upper end of the electrode assembly 14 toward the axial direction α, from a substantial center between the center and the outermost circumference in the radial direction. The negative electrode lead 20 extends, on a lower end of the electrode assembly 14, toward the axial direction α from near the winding axis.

The negative electrode plate 12 has a band-shaped negative electrode core, a negative electrode mixture layer formed on each surface of the negative electrode core, and a negative electrode exposed part in which the negative electrode core is exposed. A thickness of the negative electrode core is, for example, greater than or equal to 5 µm and less than or equal to 30 µm. A thickness of the negative electrode mixture layer is, for example, greater than or equal to 10 µm and less than or equal to 150 µm on each side of the negative electrode core. For the negative electrode core, a foil of a metal that is stable in a potential range of the negative electrode plate 12, such as copper, a film in which such a metal is provided on a surface layer, or the like can be used. The negative electrode mixture layer includes, for example, a negative electrode active material, a binder, and the like. The negative electrode plate 12 is produced by, for example, applying a negative electrode mixture slurry including the negative electrode active material, the binder, and a solvent such as water on a surface of the negative electrode core, drying the resulting coating film, and then compressing it to form a negative electrode mixture layer on each surface of the negative electrode core.

In the present embodiment, the negative electrode lead 20 is joined to a surface on an inner circumferential side of the negative electrode core with, for example, ultrasonic welding. One end of the negative electrode lead 20 is disposed on a negative electrode exposed part, and the other end thereof extends downward from a lower end of the negative electrode exposed part. The position of the negative electrode lead 20 to be disposed is not limited to an inner winding end as illustrated in FIG. 2, and may be any position in the longitudinal direction γ from the inner winding end to the outer winding end. The negative electrode exposed part is provided by, for example, intermittent application in which the negative electrode mixture slurry is not applied on a part of the negative electrode core.

Examples of the negative electrode active material contained in the negative electrode mixture layer include a carbon-based active material that reversibly occludes and releases lithium ions. A preferable carbon-based active material is graphite including natural graphite such as flake graphite, massive graphite, and earthy graphite, and artificial graphite such as massive artificial graphite (MAG) and graphitized mesophase carbon microbeads (MCMB). For the negative electrode active material, a Si-based active material that is consisted of at least one of Si and a Si-containing compound may be used, and a carbon-based active material and a Si-based active material may be used in combination.

As the binder contained in the negative electrode mixture layer, a fluororesin, PAN, a polyimide, an acrylic resin, a polyolefin, or the like may be used in the same manner as in the case of the positive electrode plate 11, and a styrene-butadiene rubber (SBR) is preferably used. The negative electrode mixture layer preferably further includes CMC or a salt thereof, polyacrylic acid (PAA) or a salt thereof, polyvinyl alcohol (PVA), or the like. In particular, SBR is preferably used in combination with CMC or a salt thereof, or PAA or a salt thereof. Note that a conductive agent may be included in the negative electrode mixture layer.

For the separator 13, a porous sheet having an ion permeation property and an insulation property is used. Specific examples of the porous sheet include a fine porous thin film, a woven fabric, and a non-woven fabric. As a material of the separator 13, an olefin resin such as polyethylene and polypropylene is preferable. A thickness of the separator 13 is, for example, greater than or equal to 10 µm and less than or equal to 50 µ m. The separator 13 tends to be thinned due to higher capacity and higher output of the battery. The separator 13 has a melting point of, for example, approximately greater than or equal to 130°C and less than or equal to 180°C.

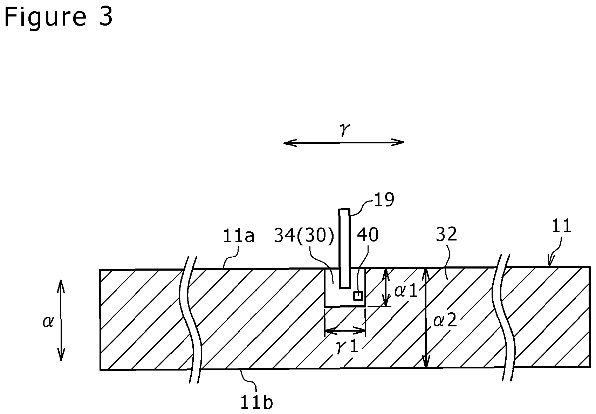

Next, the positive electrode plate 11 will be described with reference to FIGS. 3 to 5. FIG. 3 is a diagram illustrating the positive electrode plate 11 of an example of an embodiment, in a developed state. Note that, in FIG. 3, a first tape 42 and a second tape 44, which will be described later, are not illustrated. Although, in the present embodiment, the case where the positive electrode plate 11 is a first electrode plate is described, the negative electrode plate 12 may be the first electrode plate.

The positive electrode plate 11 has a band-shaped positive electrode core 30, a positive electrode mixture layer 32 formed on each surface of the positive electrode core 30, and a positive electrode exposed part 34 in which the positive electrode core 30 is exposed. A thickness of the positive electrode core 30 is, for example, greater than or equal to 10 µm and less than or equal to 30 µm. A thickness of the positive electrode mixture layer 32 is, for example, greater than or equal to 50 µm and less than or equal to 200 µm on each side of the positive electrode core 30. For the positive electrode core 30, a foil of a metal that is stable in a potential range of the positive electrode plate 11, such as aluminum, a film in which such a metal is provided on a surface layer, or the like can be used. The positive electrode mixture layer 32 includes, for example, a positive electrode active material, a conductive agent, a binder, and the like. The positive electrode plate 11 is produced by, for example, applying a positive electrode mixture slurry including the positive electrode active material, the conductive agent, the binder, and a solvent such as N-methyl-2-pyrrolidone (NMP) on a surface of the positive electrode core 30, drying the resulting coating film, and then compressing it to form a positive electrode mixture layer 32 on each surface of the positive electrode core 30.

Examples of the positive electrode active material may include a lithium-containing transition metal oxide containing a transition metal element such as Co, Mn, and Ni. The lithium-containing transition metal oxide is not limited to a particular oxide, and preferably a composite oxide represented by the general formula Li₁₊ₓMO₂ (in the formula, -0.2 < x ≤ 0.2 and M includes at least one of the group consisting of Ni, Co, Mn, and Al).

Examples of the above-described conductive agent include carbon materials such as carbon black (CB), acetylene black (AB), Ketjenblack, and graphite. Examples of the above-described binder include fluororesins such as polytetrafluoroethylene (PTFE) and polyvinylidene fluoride (PVdF), polyacrylonitrile (PAN), a polyimide (PI), an acrylic resin, and a polyolefin resin. With these resins, carboxymethyl cellulose (CMC) or a salt thereof, polyethylene oxide (PEO), and the like may be used in combination. These materials may be used singly, or may be used in combination of two or more thereof.

In the example illustrated in FIG. 3, the positive electrode exposed part 34 is provided on a central part in the longitudinal direction γ of the positive electrode plate 11. The positive electrode exposed part 34 may be formed near an end in the longitudinal direction γ of the positive electrode plate 11, but is preferably provided at a position of substantially same distance from both ends in the longitudinal direction γ from a viewpoint of current collectability. When the positive electrode lead 19 is connected to the positive electrode exposed part 34 provided at the above-described position, the positive electrode lead 19 is disposed to protrude upward from an end surface in the axial direction at a substantially medial position in the radial direction β of the electrode assembly 14 when being wound as the electrode assembly 14. The positive electrode exposed part 34 is provided by, for example, intermittent application in which the positive electrode mixture slurry is not applied on a part of the positive electrode core 30. Note that a plurality of positive electrode exposed parts 34 may be provided in the longitudinal direction γ of the positive electrode plate 11.

The positive electrode exposed part 34 is provided so as to be in contact with one end 11a in the short direction α of the positive electrode plate 11. The positive electrode exposed part 34 is adjacent to the positive electrode mixture layer 32 in the short direction α and the longitudinal direction γ of the positive electrode core 30. In other words, the positive electrode exposed part 34 is surrounded from three directions by the positive electrode mixture layer 32 in the short direction α and the longitudinal direction γ of the positive electrode plate 11, and does not reach the other end 11b of the positive electrode plate 11. This increases the rigidity of the positive electrode core 30 in the positive electrode exposed part 34, so that an identification mark part 40, which will be described later, can be formed with high accuracy.

The positive electrode exposed part 34 has, for example, a substantially rectangular shape. A depth α1 of the positive electrode exposed part 34 (a length in the short direction α) is, for example, greater than or equal to 0.05 times and less than or equal to 0.7 times a depth α2 (a length in the short direction α) of the positive electrode plate 11. A width γ1 of the positive electrode exposed part 34 (a length in the longitudinal direction γ) is, for example, greater than or equal to 1.0 times and less than or equal to 10 times a depth α1 of the positive electrode exposed part 34.

The positive electrode exposed part 34 is provided at a position where both surfaces of the positive electrode core 30 face each other. That is, the positive electrode exposed part 34 has substantially the same shape and is provided at substantially the same position, at each surface of the positive electrode core 30.

The positive electrode lead 19 is connected to the positive electrode exposed part 34 in at least one surface of the positive electrode core 30, and extends from the one end 11a of the positive electrode plate 11. The positive electrode lead 19 is joined to the positive electrode exposed part 34 with, for example, laser welding, ultrasonic welding, or the like. A width of the positive electrode lead 19 (a length in the longitudinal direction γ) is, for example, greater than or equal to 0.05 times and less than or equal to 0.7 times the width γ1 of the positive electrode exposed part 34.

The identification mark part 40 is formed on the positive electrode exposed part 34 in any one surface of the positive electrode core 30. In other words, the identification mark part 40 may be formed on a surface of the positive electrode exposed part 34 to which the positive electrode lead 19 is connected, or may be formed on a surface of the positive electrode exposed part 34 to which the positive electrode lead 19 is not connected. In the present embodiment, the identification mark part 40 is formed on the surface of the positive electrode exposed part 34 to which the positive electrode lead 19 is connected.

In the present embodiment, the identification mark part 40 is formed on the other end 11b side of the positive electrode plate 11 rather than the positive electrode lead 19 in the short direction α of the positive electrode plate 11. Note that a position where the identification mark part 40 is provided is not limited to an example in FIG. 3. The identification mark part 40 may be formed to be adjacent to the positive electrode lead 19 in the longitudinal direction γ of the positive electrode plate 11. That is, the identification mark part 40 may be formed at any position where the positive electrode lead 19 is not provided in the positive electrode exposed part 34.

The identification mark part 40 is, for example, a QR code (registered trademark), which is a two-dimensional code. The identification mark part 40 includes at least one piece of information of, for example, a production facility, a production line, an operator, and a production date as manufacturing process history records. Even if most of components of the secondary battery 10 are deformed by the effect of high heat due to an abnormality of the secondary battery 10, for example, the electrode plates inside, such as the positive electrode core 30, that are each formed of a metal material are less likely to be deformed. Therefore, enabling confirmation of the manufacturing process history records at the time of occurrence of a failure in the secondary battery 10 makes it easy to quickly analyze a cause of the failure. Other than a two-dimensional code, the identification mark part may be formed of numbers, characters, or a combination of numbers and characters. Also, the identification mark part may be formed of protrusions, holes, or a combination of protrusions and holes. Also, the identification mark part may be a one-dimensional code such as a bar code, and is not limited thereto.

In the present embodiment, the identification mark part 40 is formed via laser marking. Laser marking is contactless marking using laser beam, generates no static electricity, enables high-speed marking work, and has high productivity. In forming the identification mark part 40, laser beam is applied to the positive electrode exposed part 34 while the positive electrode plate 11 is transported in one direction via a plurality of rollers, to form the identification mark part 40. Note that the identification mark part 40 is not limited to those formed via laser marking, but may be formed by, for example, inkjet printing. Alternatively, without having to be limited to this, the positive electrode plate 11 may be stopped, so that the identification mark part 40 can be formed on the positive electrode exposed part 34.

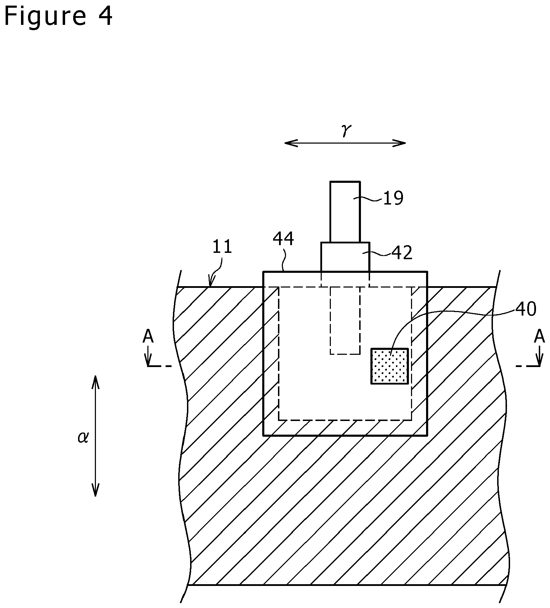

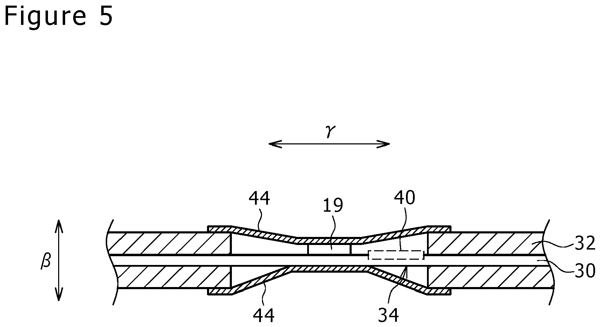

Next, a configuration of the periphery of the positive electrode exposed part 34 will be described with reference to FIGS. 4 and 5. FIG. 4 is an enlarged view of the periphery of the positive electrode exposed part 34 in the positive electrode plate 11 in FIG. 3. FIG. 5 is a sectional view taken along line A-A in FIG. 4.

As illustrated in FIG. 4, the identification mark part 40 is covered by the second tape 44. This can suppress damage of the identification mark part 40. The second tape 44 preferably has transparency. Here, the transparency means that a reading device can recognize the identification mark part 40 and can read the contents of the two-dimensional code. This enables the reading device to read the identification mark part 40 without removing the second tape 44. Note that the second tape 44 may be semi-transparent or opaque, or may be colorless or colored.

A portion of the positive electrode lead 19, the portion extending from the positive electrode exposed part 34 and a portion of the positive electrode lead 19, the portion being connected to the positive electrode exposed part 34 are covered by the first tape 42 and the second tape 44. The first tape 42 is attached to the positive electrode lead 19 in such a manner that the first tape 42 is wound around the portion of the positive electrode lead 19, the portion extending from the positive electrode exposed part 34, and the portion of the positive electrode lead 19, the portion overlapping with the positive electrode exposed part 34.

As illustrated in Fig. 5, the second tape 44 consists of two pieces. One of the two pieces of the second tape 44 covers the positive electrode lead 19, the positive electrode exposed part 34, and a part of the positive electrode mixture layer 32. The other of the two pieces of the second tape 44 covers the positive electrode exposed part 34, and a part of the positive electrode mixture layer 32. Then, as illustrated in FIG. 4, the two pieces of the second tape 44 are bonded to each other at respective portions protruding from the one end 11a in the short direction α of the positive electrode plate 11.

Each of the first tape 42 and the second tape 44 is formed of an insulating material. Each of the first tape 42 and the second tape 44 is made of, for example, a resin such as polypropylene (PP). The first tape 42 and the second tape 44 can prevent an internal short circuit in a case where the separator 13 between the positive electrode plate 11 and the negative electrode plate 12 is ruptured.

According to the positive electrode plate 11, the electrode assembly 14, and the secondary battery 10 described above, regardless of rigidity of the positive electrode core 30, surrounding the positive electrode exposed part 34 from the three directions by the positive electrode mixture layer 32 enables an increase in rigidity of the portion in which the identification mark part 40 is formed. This enables the identification mark to be formed with high accuracy. Therefore, at the time of occurrence of a failure in a manufacturing process of the secondary battery 10 or after shipment of the secondary battery 10, the identification mark can be easily confirmed. For example, when the identification mark part 40 is a two-dimensional code or a one-dimensional code, the manufacturing history records can be quickly confirmed by reading the code using a reading device. This makes it possible to quickly perform analysis of a cause of the failure on the basis of the identification mark.

Also, subject products each having a cause of a failure can be quickly selected. In reality, for example, a plurality of positive electrode plates 11 are obtained by cutting a positive electrode plate hoop and position information pieces indicating positions in the positive electrode plate hoop from which the respective positive electrode plates 11 were cut out can be tracked on the electrode plate-by-electrode plate basis from respective identification mark parts 40 (the same applies to the negative electrode plate 12). Also, information is shared by association between at least one of the positive electrode plate 11, the electrode assembly 14, and the secondary battery 10 of the embodiment, and a manufacturing execution system (MES) that performs product quality management, manufacturing management, and the like, in a production system of the product, enabling streamlining of the production system. Note that for the identification mark parts, a same one can be used for a group that is a predetermined lot of positive electrode plates 11. For example, the identification display part may be a lot ID set on a lot-by-lot basis.

### REFERENCE SIGNS LIST

10 Secondary battery, 11 Positive electrode plate, 11a One end, 11b The other end, 12 Negative electrode plate, 13 Separator, 14 Electrode assembly, 15 Exterior housing body, 16 Sealing assembly, 17, 18 Insulating plate, 19 Positive electrode lead, 20 Negative electrode lead, 21 Grooved portion, 22 Filter, 23 Lower vent member, 24 Insulating member, 25 Upper vent member, 26 Cap, 26a Opening, 27 Gasket, 30 Positive electrode core, 32 Positive electrode mixture layer, 34 Positive electrode exposed part, 40 Identification mark part, 42 First tape, 44 Second tape

## Claims

1. An electrode plate, comprising:
a band-like core;
a mixture layer that is formed on each surface of the core; and
an exposed part that is provided so as to be in contact with one end in a short direction of the core and in which the core is exposed, wherein
the exposed part is provided at a position where both surfaces of the core face each other, and is adjacent to the mixture layer in the short direction and a longitudinal direction of the core,
in any one surface of the core, a lead is connected to the exposed part to extend from the one end, and
on any one surface of the core, an identification mark part capable of specifying a manufacturing process history records is formed on the exposed part.

2. The electrode plate according to claim 1, wherein
the identification mark part is covered by a tape.

3. The electrode plate according to claim 2, wherein
the tape is transparent.

4. The electrode plate according to any one of claims 1 to 3, wherein
the identification mark part is formed via laser marking.

5. An electrode assembly in which a first electrode plate and a second electrode plate having different polarities from each other are wound with a separator interposed between the first electrode plate and the second electrode plate, wherein
the first electrode plate is the electrode plate according to any one of claims 1 to 4.

6. A battery, comprising:
the electrode assembly according to claim 5;
an electrolyte; and
an exterior housing can that houses the electrode assembly and the electrolyte.
